# EUROPEAN PATENT SPECIFICATION

(11) **EP 0 863 024 B1**
(45) Date of publication and mention of the grant of the patent: **28.05.2003**
(21) Application number: 98830110.7
(22) Date of filing: 02.03.1998
(51) Int. Cl.: B44C 1/22

(54) **Process for the reproduction of images by means of engraving on a flat, rigid support**
Verfahren zur Wiedergabe von Bildern durch Gravieren auf einer ebenen starren Unterlage
Procédé pour la réproduction d'images par gravure sur un support rigide plat

(30) Priority: 03.03.1997 IT LU970003
(43) Date of publication of application: 09.09.1998
(73) Proprietor: Arteidea s.n.c. di Lunardini Rodolfo, 55050 Bozzano, Massarosa (Lucca) (IT)
(72) Inventor: Lunardini, Rodolfo, 55054 Massarosa, (Lucca) (IT)
(74) Representative: Bardini, Marco Luigi

(56) References cited:
- EP-A- 0 104 123
- EP-A- 0 462 097
- FR-A- 2 649 646
- FR-A- 2 750 648
- GB-A- 2 296 788
- US-A- 4 972 323

## Description

The present invention relates to the field of production of ornamental articles by means of sculptural techniques and, in particular, it relates to a process for the reproduction of images by engraving on a flat support made of a rigid material such as wood, stone, metal, plastic or glass. GB-A-2 296 788 discloses a process for the reproduction of images by means of enproving a that support.

The sculptural techniques currently known for the ; engraving of images on flat rigid supports are all derived fundamentally from the technique used in bas-relief, in which the desired dark/light effect is accomplished by the removal of material from the surface of the same support and the consequent creation of cavities of a opportune shape and distribution. In this way, the contrast necessary to define the image is created by the effect of shade projected by the light in correspondence with said cavities.

In particular, a technique of craftsmanship widely used for its relative simplicity is that in which the cavities on the flat support are the product of a plurality of point-shaped incisions, made either manually or with small machines for automatic working, whose greater or lesser density per unit of surface area produces the desired dark/light effect. More specifically, in the areas in which the incisions are concentrated, the light produces an intense shade, so that such areas appear dark, whereas the areas in which the engravings are less concentrated appear lighter.

All of the known techniques, and in particular the one described above, have the common drawback that they are not able to represent the image with a satisfactory three-dimensional effect. In fact, although they define the contrast between light and dark areas of the image, they are not able to effectively represent the various gradations in tone comprised between black and white that are necessary to convey the image with the required depth and, thus, depict it with satisfactory three-dimensional effect. Engravings realized with these techniques are, therefore, substantially two-dimensional and, in this regard, their aesthetic quality is often unsatisfactory.

One object of the present invention is to provide a process for the reproduction of images by means of engraving on a flat support made of a rigid material, for producing unique works or small series' of works, which makes it possible to represent images with a distinct three-dimensional effect.

A further object of the present invention is to provide a process of the above-mentioned type which can be simply and inexpensively automated with suitable small machinery.

These objects are achieved with the process according to the present invention, which comprises the following steps:
- scanning the image;
- assigning at each scanning interval a value for the gradation of gray, assumed constant for the interval;
- assigning a direct relation between said value and the depth of penetration of an engraving tool of the support;
- engraving the support according to a pattern of equidistant linear traces in which, point by point, the depth of each trace is a function, according to said relation, of the value of the gradation of gray of the corresponding scanning interval, whereby the dark/light effect is produced by the different intensities of shade projected by the light in correspondence with said traces, as a function of their greater or lesser depth.

The characteristics and advantages of the process for the reproduction of images according to the present invention will become apparent from the following description of one of its possible embodiments, given as an example and not limitative, with reference to the attached drawings in which:
- figure 1 shows an illustrative scheme of the engraving step of the process according to the present invention;
- figure 2 shows the design of a geometric image to be represented with the process according to the invention;
- figure 3 is a top plan geometric view of a support engraved with the process according to the invention so as to represent the image of figure 2 by way of a pattern of equidistant parallel lines;
- figure 4 is a sectional view, taken along lines IV-IV, of the flat support in figure 3;
- figure 5 is a top plan view of the- support in figure 3, in which the dark/light effect created by the shadows projected by the light on the support is represented;
- figure 6 is a view, similar to that of figure 5, of a support engraved with the process according to the invention so as to represent the image in figure 2 by means of a pattern of concentric circular lines;
- figure 7 is a view, similar to that of figure 5, of a support engraved with the process according to the invention so as to represent the image in figure 2 by means of a pattern of triangular lines formed in a mosaic-like pattern.

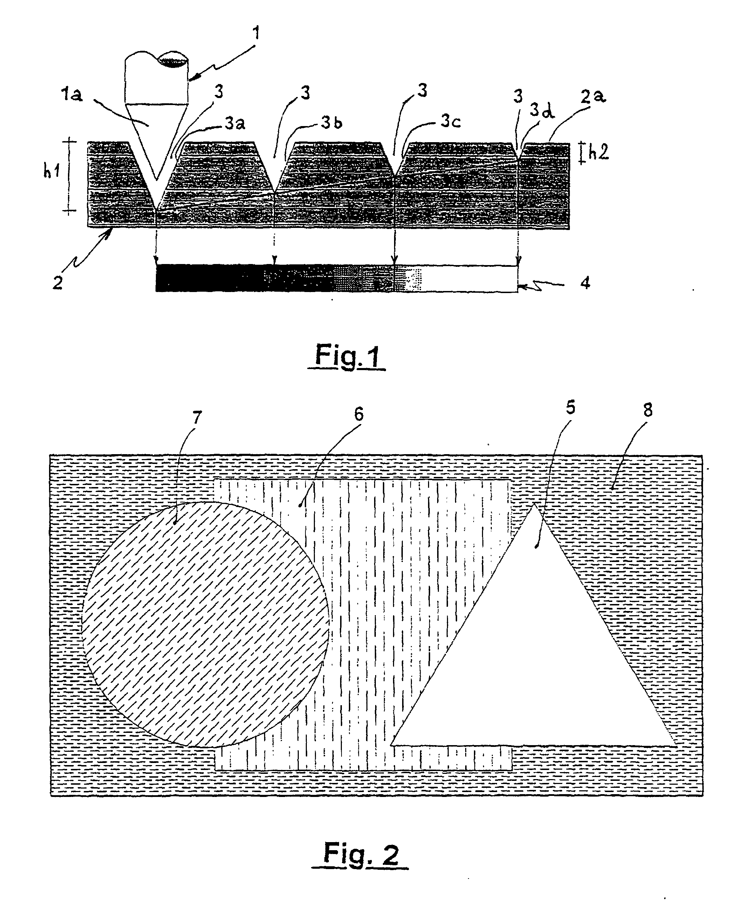

With reference to figure 1, the process is carried out with the use of an engraving tool 1, having a point 1a, typically of a conical form, as in the figure, but also of other forms, as we will see further along. Tool 1 is suited to form linear traces 3 on a face 2a of a flat support 2 made of a rigid material, a portion of which is shown schematically in a sectional view in the figure. Traces 3 have a V-shaped cross-section whose depth varies depending on the degree of penetration of the tool in support 2.

In particular, the maximum penetration of the tool creates a trace of maximum depth h1, like the trace indicated at 3a, whereas a trace like 3d, having a minimum depth indicated at h2, corresponds to a minimum penetration. Intermediate gradations of penetration between the maximum and the minimum create traces of a depth comprised between h1 and h2, two of which are shown in the figure and indicated at 3b and 3c.

Given the V-shaped form of point 1a, and consequently of traces 3, the width of the trace engraved on surface 2a is directly proportional to the degree of penetration of the tool and, therefore, to the depth of the trace itself, so that traces 3a and 3d are respectively of a maximum and a minimum width.

If, as in the figure, a plurality of adjacent traces is formed with the same center to center distance between one trace and the next, the light will produce, on face 2a, in correspondence with each trace, a shadow whose intensity will be directly proportional to the depth and the width of the trace itself. Trace 3a thus creates, according to the reading scale 4 in the figure, a shade of such intensity that the surface of face 2a in correspondence with the trace appears to be substantially black, whereas the shade created by trace 3d, of minimum intensity and as such practically imperceptible to the eye, makes the surface in correspondence with it appear substantially white. Traces of intermediate depth like 3b and 3c will produce shades of an intensity that will appear as different gradations of gray.

With reference now also to figures 2 to 5, on the basis of what has been described above, the engraving process according to the invention begins with the choice of the two-dimensional image to be reproduced. Such image should have high contrast and preferably be in black and white. For example, in figure 2, an image to be reproduced is illustrated in which, on a substantially black background 8, a dark gray colored circle 7, a light gray square 6 and a white triangle 5 can be seen.

The image must then be scanned according to a grid whose sections, which are generally quadrilateral, are small enough that the intensity of the gradation of gray within them can be considered approximately uniform. A pattern is chosen according to which traces 3 will be engraved on support 2, for example, as in the illustration, having the form of a plurality of parallel, equidistant, rectilinear traces. At this point, it is necessary to establish a relation between the average gradation of gray in each scanning section and the depth that the trace passing the corresponding point on support 2 must have at that point to create, according to the description above, the desired gradation of gray. On the basis of that relation, it will be possible to advantageously control the penetration of the tool during the engraving of each trace to obtain the appropriate dark/light effect.

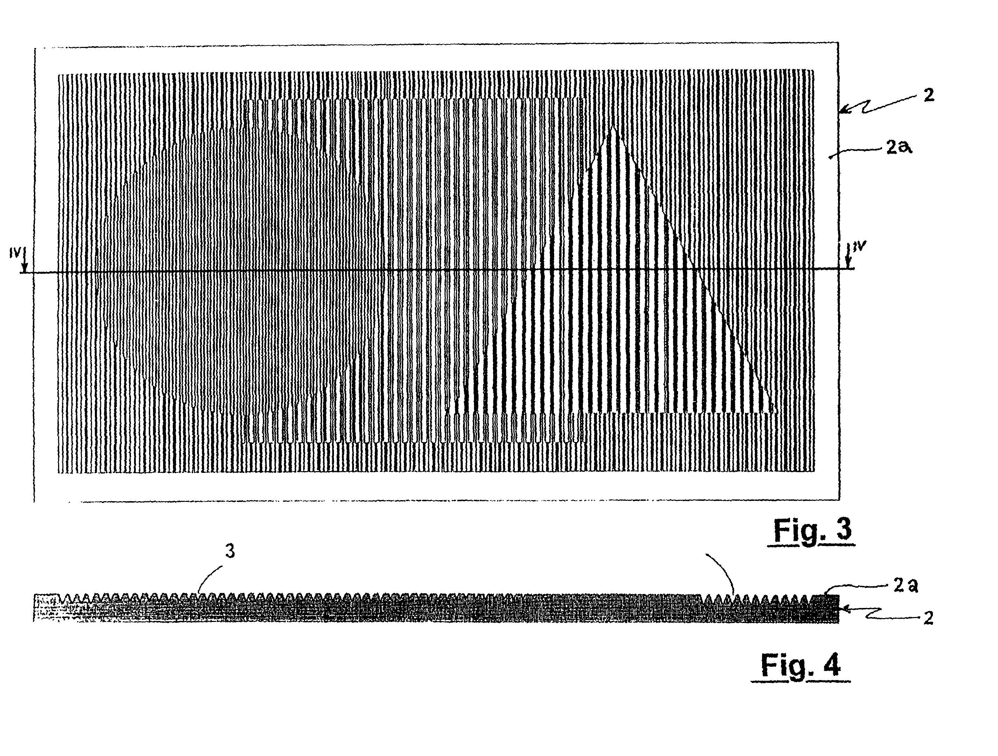

The result of this operation is shown in particular in figures 3, 4 and 5, in which the lighter zone, represented by triangle 5, is the effect of traces of a minimal depth, equal to h2, like trace 3d, whereas traces having a maximum depth, equal to h1, like trace 3a, produce a substantially black background 8. Circle 7 and square 6 are the products of traces of an intermediate depth, respectively similar to traces 3b and 3c.

While all of the above-mentioned steps can be carried out manually, it is advantageous to use computerized instrumentation comprising means for the acquisition of the image as well as suitable software for scanning the image, assigning an opportune average value for the gradation of gray to each scanning section and establishing a relation between said value and, point by point, the depth of the trace to be made, for the purpose of driving, for example by means of a PLC system, a pantograph for controlling tool 1.

If the image to be reproduced is on a paper support, the means of acquisition of the image will consist in a scanner. Often, however, the image is already available in a digital form as a graphic file, for example memorized on a hardware support such as a optical disk (CD ROM). In these cases the means of acquisition consist eventually only in the software for the management of said files.

Once it has been preliminarily determined, the setting of the center to center distance between the traces is maintained constant during the engraving operation. The choice of the most advantageous value is dependent above all on the plasticity of the material. The more plastic the material, the closer to one another the traces may be formed without risk of fracturing the surface of face 2a. Therefore, with a highly plastic material, it is possible to perform a more intense scanning and thus obtain a more defined image. The choice of the center to center distance must furthermore take into account the thickness of the support and the shape of the tool. In fact, assuming that we are still working with a tool having a conical point, the width of the trace, and consequently the width of the strips of surface 2a between one trace and another, can be adjusted simply by varying the depth of the penetration. In cases in which that depth is limited as a result of the limited thickness of the support, the center to center distance must be smaller to ensure that in the areas that are to be represented as dark, the incisions, even if not very deep, can engrave a substantial quantity of material on the surface of face 2a and consequently produce the necessary shade.

A conical shape of the tool is without doubt the most advantageous, since it makes it possible, as already mentioned, to establish a simple relation between the depth of the trace and the quantity of material removed. The tool can, however, have other shapes as a function, for example, of the type of material the support is made of, and, consequently, the proportion of the depth of the trace to its width is variable from case to case, even becoming equal to zero if the tool is cylindrical. For this reason, a suitable setting of the center to center distance is necessary to obtain, each time, an optimal distribution of the incisions in relation to their width and, thus, the best possible aesthetic result.

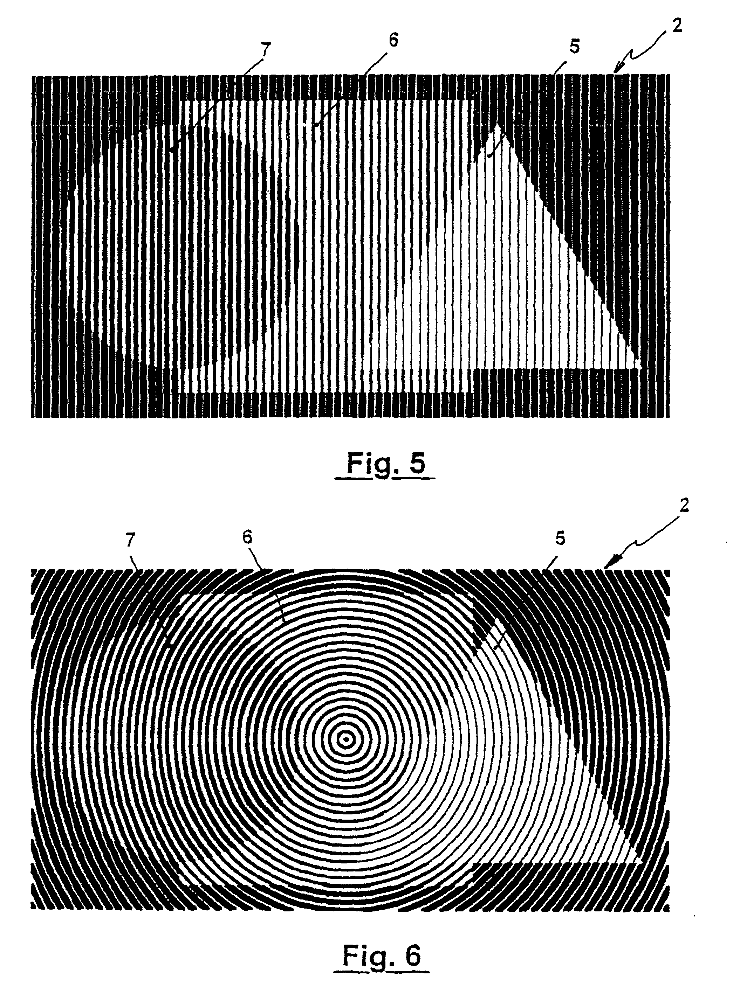

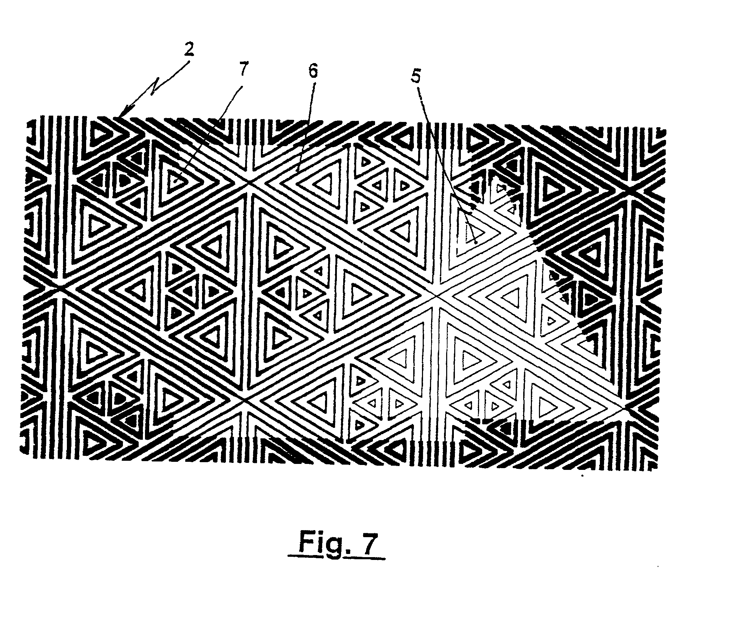

As mentioned above, the form of the pattern of the traces can be freely chosen as long as it completely and effectively covers face 2a of support 2. In figures 6 and 7, a pattern of concentric circular lines and one of triangular lines in a mosaic-like distribution are shown respectively, and both are used for the engraving of the image of figure 2. It is possible to see how the use of patterns of different or special types can produce a particularly pleasant and original effect.

Although in the drawings reference has been made to designs of a geometric image, the potentiality of the process according to the invention can be realized even more fully in the engraving of photographic or painted images, in which the possibility of realizing with continuity all of the various gradations of gray makes it possible to obtain a fully three-dimensional effect.

From the above, it is clear that the process for the reproduction of images by means of engraving according to the present invention is able to achieve a fully satisfactory aesthetic result, in particular with regard to the three-dimensional effect of the image produced. The process is, furthermore, simple to execute and can be realized automatically with the use of hardware and software that can easily and inexpensively be acquired on the market.

The process according to the invention is of particularly advantageous use, not only in the artistic field, for the execution of panels and pictures, but also in many other fields such as furnishing, for the transferring of all types of designs and geometric decorations onto furniture, and construction, for decorating building facades, fences and floors.

Variations and/or modifications can be brought to the process for the reproduction of images by means of engraving on a flat support in rigid material according to the present invention without departing from its scope as defined in the appended claims.

## Claims

1. A process for the reproduction of images by means of engraving on a flat support (2) made of a rigid material **characterized by** the fact that it comprises the following steps:
- scanning said image;
- assigning at each scanning interval a value for the gradation of gray, assumed constant for said interval;
- assigning a direct relation between said value and the depth of penetration of an engraving tool (1) on said support;
- engraving said support by means of said tool according to a pattern of equidistant linear traces (3) in which, point by point, the depth of each trace is a function, according to said relation, of the value of the gradation of gray for the corresponding scanning interval, whereby the dark/light effect is a result of the different intensities of shade projected by the light in correspondence to said traces as a function of their greater or lesser depth.

2. The process according to claim 1, wherein said relation is linear.

3. The process according to any of the previous claims, wherein said engraving tool has a conical shaped point.

4. The process according to any of the previous claims, wherein said engraving tool is controlled by software resident in computer means, comprising means for the acquisition of said images

5. The process according to claim 4, wherein said means of acquisition comprise a scanner.

6. A flat support made of a rigid material engraved so as to reproduce an image, said support obtainable by the process according to any one of the previous claims.

## Patentansprüche

1. Verfahren zur Wiedergabe von Bildern durch Gravieren auf einer ebenen Unterlage (2), die aus einem starren Material besteht, **gekennzeichnet durch** die Tatsache, dass es die folgenden Schritte enthält:
- Abtasten des Bildes;
- Zuweisen eines Wertes für die Graugradation für jedes Abtastintervall, der für das Intervall als konstant angenommen wird;
- Zuweisen einer direkten Relation zwischen dem Wert und der Eindringtiefe eines Gravierwerkzeuges (1) auf der Unterlage;
- Gravieren der Unterlage mittels des Werkzeuges gemäß einem Muster von äquidistanten linearen Spuren (3), in welchen Punkt bei Punkt die Tiefe jeder Spur eine Funktion ist entsprechend der Relation von dem Wert der Graugradation für das entsprechende Abtastintervall, wodurch der Dunkel/Hell-Effekt ein Ergebnis der unterschiedlichen Intensitäten von Schatten ist, die **durch** das Licht in Abhängigkeit von den Spuren als eine Funktion ihrer größeren oder geringeren Tiefe projiziert werden.

2. Verfahren nach Anspruch 1, wobei die Relation linear ist.

3. Verfahren nach einem der vorhergehenden Ansprüche, wobei das Gravierwerkzeug eine konisch geformte Spitze hat.

4. Verfahren nach einem der vorhergehenden Ansprüche, wobei das Gravierwerkzeug durch Software gesteuert wird, die in Computereinrichtungen gespeichert ist, die Mittel für die Akquisition der Bilder enthalten.

5. Verfahren nach Anspruch 4, wobei die Einrichtungen zur Akquisition einen Scanner enthalten.

6. Flache Unterlage, bestehend aus starrem Material, graviert, um ein Bild wiederzugeben, welche Unterlage erhaltbar ist durch das Verfahren nach jeglichem der vorhergehenden Ansprüche.

## Revendications

1. Procédé pour la reproduction d'une image par gravure d'un support plat (2) réalisé dans un matériau rigide, **caractérisé par le fait qu'**il comprend les étapes suivantes:
- scanner ladite image,
- attribuer à chaque intervalle scanné une valeur de gradient de gris, présumée constante pour chaque intervalle,
- attribuer une relation directe entre ladite valeur et la profondeur de pénétration d'un outil de gravure (1) dans ledit support,
- graver ledit support au moyen du dit outil selon un ensemble de traces linéaires équidistantes (3) dans lequel, point par point, la profondeur de chaque trace est une fonction, par rapport à ladite relation, de la valeur du gradient de gris pour l'intervalle scanné correspondant, de façon que l'effet clair/obscur soit le résultat des différentes intensités des ombres projetées par la lumière dans lesdites traces en fonction de la plus ou moins grande profondeur de ces traces.

2. Procédé selon la revendication 1, dans lequel ladite relation est linéaire.

3. Procédé selon l'une des revendications précédentes, dans lequel l'outil de gravure comporte une pointe de forme conique.

4. Procédé selon l'une des revendications précédentes, dans lequel ledit outil de gravure est piloté par un logiciel enregistré dans des moyens d'ordinateur, comprenant des moyens d'acquisition de ladite image.

5. Procédé selon la revendication 4, dans lequel lesdits moyens d'acquisition comprennent un scanner.

6. Un support plat réalisé dans un matériau rigide gravé pour reproduire une image, ledit support pouvant être obtenu par le procédé selon l'une des revendications précédentes.
